# EUROPÄISCHE PATENTANMELDUNG

(11) **EP 2 182 420 A2**
(43) Veröffentlichungstag der Anmeldung: **05.05.2010**
(21) Anmeldenummer: 09174076.1
(22) Anmeldetag: 26.10.2009
(51) Int. Cl.: G06F 1/18

(54) **Anordnung zum Aufstellen wenigstens eines Computergehäuses**

(30) Priorität: 31.10.2008 DE 102008054200
(71) Anmelder: Sinitec Vertriebsgesellschaft mbH, 80807 München (DE)
(72) Erfinder: Schelshorn, Lorenz, 86179, Augsburg (DE); Gut, Bernhard, 86551, Aichach (DE)
(74) Vertreter: Epping - Hermann - Fischer

(57) **Zusammenfassung**

Die Erfindung betrifft eine Anordnung zum Aufstellen wenigstens eines Computergehäuses mit zwei Stellelementen (1), die jeweils einen Basisschenkel (3) zur Auflage auf einer Aufstellfläche und ein senkrecht zum Basisschenkel (3) verlaufendes Stützelement (4) zur seitlichen Stützung eines Computergehäuses umfassen. Ferner sind die Stellelemente (1) dazu eingerichtet, gegeneinander verschoben zu werden und in einer Vielzahl von Positionen miteinander zu verrasten, wobei Rastelemente (6) mit Gegenrastelementen (7) zusammenwirken. Die Anordnung weist erfindungsgemäß ein oder mehrere Erweiterungselemente (2) auf, die zwischen den zwei Stellelementen (1) angeordnet sind, wobei die Erweiterungselemente (2) zwei Basisschenkel (3) und ein senkrecht zu den Basisschenkeln (3) verlaufendes Stützelement (4) umfassen und das Stützelement (4) zwischen den zwei Basisschenkeln (3) angeordnet ist. Ferner ist erfindungsgemäß auf der Unterseite jedes Basisschenkels (3) wenigstens ein Entriegelungselement (9) angeordnet, welches dazu eingerichtet ist, ein Rastelement (6) bei Druck auf das Entriegelungselement (9) aus einer rastenden Verbindung mit einem Gegenrastelement (7) eines anderen Basisschenkels (3) zu lösen.

## Beschreibung

Die Erfindung betrifft eine Anordnung zum Aufstellen wenigstens eines Computergehäuses mit zwei Stellelementen, die jeweils einen Basisschenkel zur Auflage auf einer Aufstellfläche und ein senkrecht zum Basisschenkel verlaufendes Stützelement zur seitlichen Stützung des Computergehäuses umfassen. Die Erfindung betrifft weiterhin eine Anordnung derartiger Stellelemente, die ferner dazu eingerichtet sind, gegeneinander verschoben zu werden und in einer Vielzahl von Positionen miteinander zu verrasten, wobei Rastelemente mit Gegenrastelementen zusammenwirken.

Computergehäuse werden vielfach senkrecht aufgestellt, um Platz sparend, beispielsweise unter einem Schreibtisch oder einer Arbeitsfläche, untergebracht zu werden. Damit die Gehäuse gegen seitliches Umkippen gesichert sind, wird oftmals ein Standfuß eingesetzt.

Computersysteme werden, je nach Anwendung und Einsatz, jedoch immer häufiger als Mehrkomponenten-Systeme mit mehreren einzelnen Rechnern eingerichtet. Das bedeutet, dass auch mehrere einzelne Gehäuse kippsicher und dennoch Platz sparend aufgestellt werden müssen.

Aus der Druckschrift DE 102006048968 A1 ist ein Standfuß zum kippsicheren Aufstellen eines Computergehäuses bekannt. Dieser Standfuß hat jedoch den Nachteil, dass lediglich ein einzelnes Gehäuse aufgenommen werden kann. Einem Einsatz mehrerer Gehäuse in einem Gesamtsystem steht dies insofern als hinderlich entgegen, als zum kippsicheren Aufstellen mehrerer Gehäuse auch mehrere solcher Standfüße eingesetzt werden müssen. Dies geht mit einem erhöhten Platzbedarf und einem Mehraufwand an Kosten für die Standfüße einher.

Der aus der vorgenannten Druckschrift bekannte Standfuß erlaubt die Anpassung an eine bestimmte Gehäusebreite durch Ineinanderschieben zweier Stellelemente. Zudem sind die Stellelemente beim Ineinanderschieben in einer Vielzahl von Positionen verrastbar, sodass der Standfuß ein Gehäuse stabil umfasst. Allerdings können die Rastvorrichtungen zum erneuten Auseinanderschieben der Stellelemente für eine Anpassung an ein breiteres Gehäuse lediglich mittels eines Zusatzwerkzeugs, beispielsweise eines Schraubenziehers, gelöst werden. Zur variablen Einstellung auf mehrere Computergehäuse, die zudem unterschiedliche Gehäusebreiten aufweisen, ist der druckschriftlich bekannte Standfuß daher ungeeignet bzw. unhandlich.

Der Erfindung liegt daher die Aufgabe zugrunde, einen Standfuß zu beschreiben, der auf einfachere Weise an mehrere Computergehäuse mit unterschiedlichen Gehäusebreiten anpassbar ist.

Diese Aufgabe wird in einem ersten Aspekt durch eine Anordnung der eingangs genannten Art dadurch gelöst, dass die Anordnung ein oder mehrere Erweiterungselemente aufweist, die zwischen den zwei Stellelementen angeordnet sind, wobei die Erweiterungselemente zwei Basisschenkel und ein senkrecht zu den Basisschenkeln verlaufendes Stützelement umfassen und das Stützelement zwischen den zwei Basisschenkeln angeordnet ist.

Diese Lösung hat den Vorteil, dass ein entsprechender Standfuß durch ein oder mehrere Erweiterungselemente je nach Anforderung modular erweiterbar ist, sodass mehrere Computergehäuse Platz sparend und kippsicher nebeneinander aufgestellt werden können. Das Stützelement eines Erweiterungselements gewährleistet dabei einen verbesserten Halt zweier nebeneinander liegender Gehäuse in der Anordnung, wobei eine Belüftung aufgrund der durch das Stützelement seitlich beabstandeten Unterbringung der Gehäuse in der Anordnung nicht behindert wird.

Ein Erweiterungselement ist also mit den beiden Stellelementen oder mit einem Stellelement und einem anderen Erweiterungselement oder mit zwei anderen Erweiterungselementen verbunden, je nachdem, wie viele Computergehäuse in der Anordnung aufgenommen werden sollen.

Bevorzugt sind die Stellelemente und die Erweiterungselemente dazu eingerichtet, ineinander verschoben zu werden und in einer Vielzahl von Positionen miteinander zu verrasten. Das bedeutet, dass die Anordnung eine Anpassung an unterschiedliche Gehäusebreiten gewährleistet, wobei mehrere Gehäuse unterschiedlicher Breite in der Anordnung aufgenommen werden können. Zusätzlich erlaubt die Verrastung eine stabile Unterbringung der Gehäuse in der Anordnung. Durch die Verrastung ist sichergestellt, dass die Anordnung ihre Einstellung beibehält, wenn sie auf die einzelnen Computergehäuse eingestellt worden ist.

Vorzugsweise weist jedes der Stellelemente mindestens ein Rastelement und mindestens ein Gegenrastelement auf und weist jedes der Erweiterungselemente mindestens zwei Rastelemente und mindestens zwei Gegenrastelemente auf. Bevorzugt ist dabei jedes Rastelement beziehungsweise Gegenrastelement der Stellelemente und Erweiterungselemente derart angeordnet, dass es mit jeweils einem Gegenrastelement beziehungsweise Rastelement eines anderen Erweiterungselements oder Stellelements als Rastvorrichtung zusammenwirkt. So können beispielsweise ein Stellelement und ein Erweiterungselement an ihren Basisschenkeln ineinander geschoben werden, wobei die Rastelemente beziehungsweise Gegenrastelemente mindestens zwei Rastvorrichtungen bilden. Dies gewährt eine hohe Stabilität der Anordnung bei einfachem Zusammenstecken der Teile. Ferner kann das mit dem Stellelement verrastete Erweiterungselement an seinem noch freien zweiten Basisschenkel entsprechend mit einem weiteren Erweiterungselement oder einem zweiten Stellelement verrastet werden. Dieses modulare Konzept aus Stellelementen und Erweiterungselementen ermöglicht die Anpassung der Anordnung an die gewünschte Anzahl an aufzustellenden Computergehäusen.

Vorzugsweise weist jeder Basisschenkel jeweils eine erhobene Stellfläche auf, auf der ein aufgenommenes Computergehäuse in dessen Randbereich aufliegt. Das heißt, dass die Auflagefläche der in der Anordnung aufgenommenen Computergehäuse minimiert wird, sodass eine optimale Belüftung, sowohl seitlich, als auch am Unterboden aller Gehäuse gewährleistet ist.

Vorzugsweise ist die Anordnung dazu eingerichtet, ein oder mehrere Computergehäuse schraubenlos aufzunehmen. Dies bedeutet eine einfache und schnelle Unterbringung aller Computergehäuse.

Ein weiterer Vorteil wird erreicht, wenn jeweils die Stellelemente und jeweils die Erweiterungselemente identisch sind. Dadurch können die Fertigungskosten sowie auch die Lagerkosten deutlich verringert werden. Des Weiteren ist für einen Benutzer ein einfaches Handhaben der Anordnung sowie eine leichte und intuitive Montage gewährleistet.

Gemäß einem zweiten Aspekt der Erfindung wird die Aufgabe durch eine Anordnung der eingangs genannten Art dadurch gelöst, dass in jedem Basisschenkel wenigstens ein Entriegelungselement angeordnet ist, welches dazu eingerichtet ist, ein Rastelement bei Druck auf das Entriegelungselement aus einer rastenden Verbindung mit einem Gegenrastelement eines anderen Basisschenkels zu lösen. Dieser Aspekt der Erfindung erlaubt eine verbesserte und einfache Entriegelung der Einzelelemente bei Demontage, Veränderung oder Erweiterung der Anordnung. Somit ist die erfindungsgemäße Anordnung einfach auf variable Gehäusebreiten einstellbar. Wenn die Anordnung auf breitere Gehäuse eingestellt werden soll, so müssen lediglich die Entriegelungselemente bedient werden. Ein Zusatzwerkzeug zur Entriegelung entfällt.

Weitere vorteilhafte Ausgestaltungen der Erfindung sind in den Unteransprüchen offenbart.

Die Erfindung wird im Folgenden anhand mehrerer Zeichnungen näher erläutert.

Es zeigen:
- Figur 1: eine perspektivische Darstellung einer Anordnung von zwei Stellelementen mit einem Erweiterungsele- ment,
- Figur 2: eine Unteransicht von zwei Stellelementen und einem Erweiterungselement im nicht verrasteten Zustand,
- Figur 3: eine Unteransicht von zwei Stellelementen und einem Erweiterungselement im verrasteten Zustand,
- Figur 4: eine Unteransicht eines Stellelements mit einem Entriegelungselement im verriegelten Zustand und
- Figur 5: eine Unteransicht eines Stellelements mit einem Entriegelungselement im entriegelten Zustand.

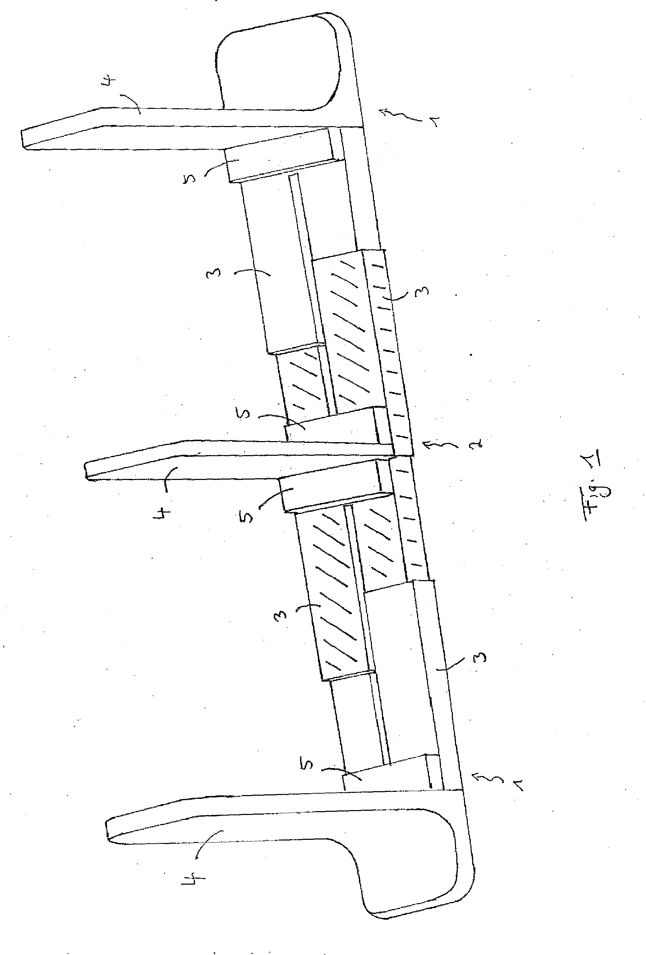

Figur 1 zeigt die Anordnung von zwei Stellelementen 1 mit einem Erweiterungselement 2. Beide Stellelemente 1 weisen je einen Basisschenkel 3 zur Auflage der Stellelemente 1 auf einer Aufstellfläche und ein senkrecht zum Basisschenkel 3 verlaufendes Stützelement 4 zur seitlichen Stützung eines Computergehäuses auf. Ferner weist das Erweiterungselement 2 zwei Basisschenkel 3 sowie ein senkrechtes Stützelement 4 auf, welches zwischen den zwei Basisschenkeln 3 angeordnet ist. Zur besseren Darstellung sind die beiden Basisschenkel 3 des Erweiterungselements 2 schraffiert dargestellt. An jedem Basisschenkel 3 ist zusätzlich eine Stellfläche 5 angeordnet zur Aufnahme eines Gehäuses eines Computersystems.

Alle Basisschenkel 3 sind derart ausgeführt, dass die beiden Stellelemente 1 und das Erweiterungselement 2 an ihren jeweiligen Basisschenkeln 3 ineinander geschoben sind. Aufgrund des zwischen den zwei Stellelementen 1 angeordneten Erweiterungselements 2 können insgesamt zwei Gehäuse eines Computersystems aufgenommen werden. Durch die Möglichkeit des Ineinanderschiebens aller Elemente ergibt sich eine variable Anpassung der Anordnung an unterschiedliche Breiten von Computergehäusen.

Die Stellflächen 5 erzeugen eine minimale Auflagefläche aller in die Anordnung eingebrachten Computergehäuse, sodass eine optimale Belüftung der Gehäuse gewährleistet ist. Durch das am Erweiterungselement 2 angeordnete Stützelement 4 werden zwei in die Anordnung eingesetzte Computergehäuse zusätzlich seitlich beabstandet, sodass auch eine seitliche Belüftung der Computergehäuse nicht behindert wird. Die beiden Stützelemente 4 der Stellelemente 1 schließen die gesamte Anordnung seitlich ab, wobei alle Computergehäuse gegen seitliches Verkippen gesichert sind.

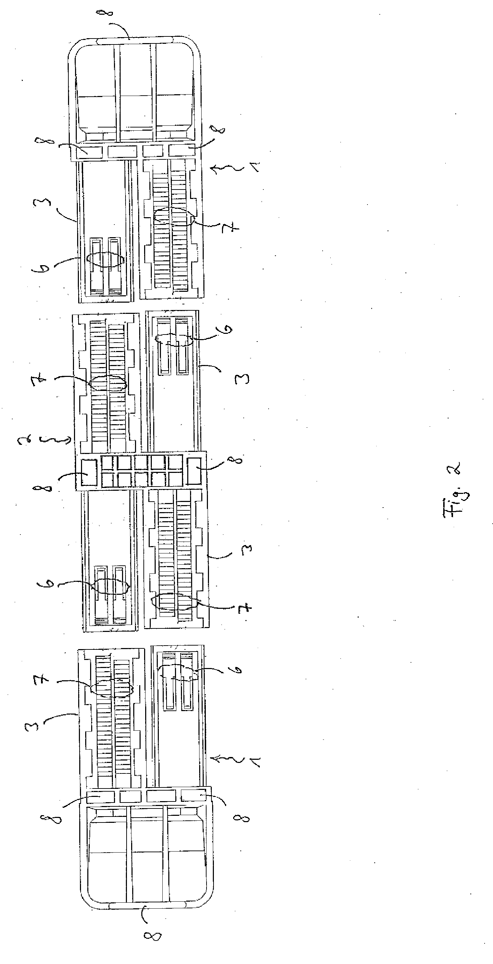

Figur 2 zeigt die Unteransicht von zwei Stellelementen 1 und einem Erweiterungselement 2, wobei die Einzelelemente nicht ineinander geschoben sind. Jeder Basisschenkel 3 der Stellelemente 1 und des Erweiterungselements 2 weisen je ein Rastelement 6 sowie ein Gegenrastelement 7 auf. Ein Rastelement 6 ist hier in Form von zwei Schnapphaken ausgebildet, welche zum Zusammenwirken mit zwei Zahnreihen eines Gegenrastelements 7 eingerichtet sind. Die beiden Zahnreihen des Gegenrastelements 7 sind dabei versetzt angeordnet, sodass auf eine einfache Weise eine Vielzahl von Rastpositionen möglich ist.

Die Rastelemente 6 und Gegenrastelemente 7 aller Basisschenkel 3 sind derart zueinander angeordnet, dass bei Ineinanderschieben eines Stellelements 1 und eines Erweiterungselements 2 jeweils ein Rastelement 6 mit einem Gegenrastelement 7 als Rastvorrichtung zusammenwirkt. So ergeben sich insgesamt zwei Rastvorrichtungen bei Ineinanderschieben eines Stellelements 1 und eines Erweiterungselements 2. Die Stellelemente 1 sind dabei identisch ausgeführt, sodass ein Stellelement 1 auf beiden Seiten eingesetzt werden kann und keine Verwechslungsgefahr besteht. Dadurch ist die Position der Rastelemente 6 und Gegenrastelemente 7 am Erweiterungselement 2 festgelegt, sodass das Erweiterungselement 2 richtungsunabhängig zwischen die beiden Stellelemente 1 eingesetzt werden kann. Dies gewährleistet ein einfaches und intuitives Zusammenstecken aller Teile.

Bei Ineinanderschieben gleiten die Schnapphaken der Rastelemente 6 entlang der Zahnreihen der Gegenrastelemente 7 und verrasten mit diesen derart, dass ein Stellelement 1 und ein Erweiterungselement 2 nicht mehr auseinander gezogen werden können. Erst ein Entriegeln der Schnapphaken der Rastelemente 6 aus den Zahnreihen der Gegenrastelemente 7 ermöglicht eine Demontage der Stellelemente 1 von dem Erweiterungselement 2. Das bedeutet, dass die gesamte Anordnung an zwei Computergehäuse variabler Breite angepasst werden kann, wobei die Konfiguration nach Einrasten aller Elemente in den gewünschten Abstand fixiert bleibt. Zusätzlich sind an den Stellelementen 1 sowie am Erweiterungselement 2 Gummielemente 8 angeordnet, die ein Verrutschen der Anordnung auf einer Aufstellfläche minimieren.

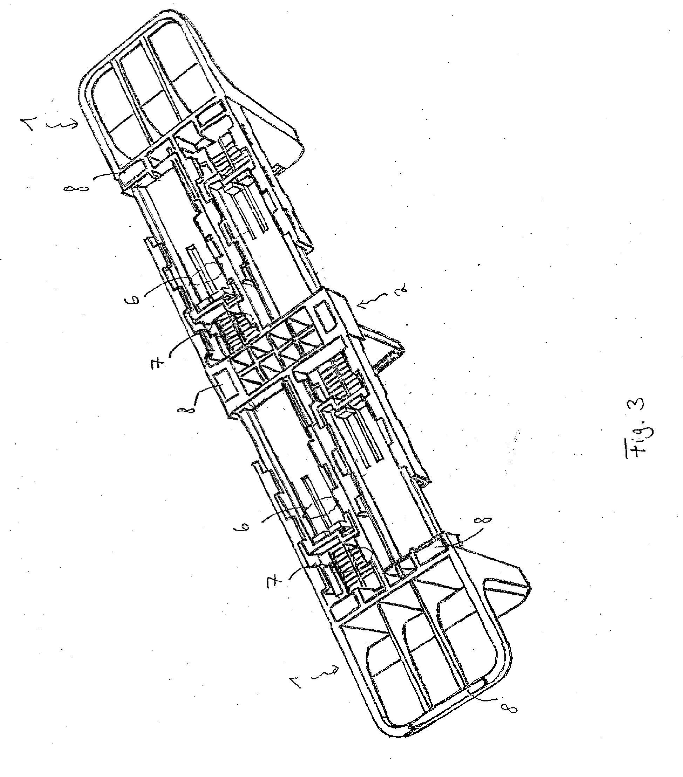

Figur 3 zeigt weiterhin eine Unteransicht einer Anordnung von zwei Stellelementen 1 mit einem Erweiterungselement 2 im ineinander geschobenen Zustand der Einzelelemente. Die Schnapphaken der Rastelemente 6 sind in den Zahnreihen der Gegenrastelemente 7 verrastet, wodurch die Stellelemente 1 zu dem Erweiterungselement 2 in vorbestimmten Abständen zur Aufnahme zweier Computergehäuse festgelegt sind.

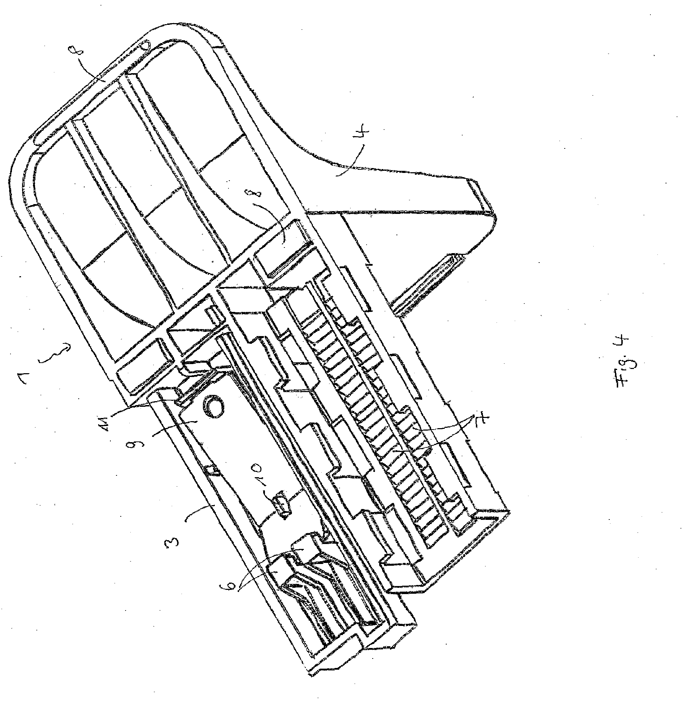

Figur 4 zeigt eine Unteransicht eines Stellelements 1, welches ebenfalls einen Basisschenkel 3 sowie ein Stützelement 4 aufweist. Der Basisschenkel 3 weist jeweils zwei Schnapphaken eines Rastelements 6 sowie zwei Zahnreihen eines Gegenrastelementes 7 auf. Dabei sind das Rastelement 6 und das Gegenrastelement 7 derart eingerichtet, dass sie mit einem Gegenrastelement 7 beziehungsweise einem Rastelement 6 eines anderen Stellelements 1 oder eines Erweiterungselements 2 gemäß den Figuren 1 bis 3 als Rastvorrichtungen zusammenwirken. Die Schnapphaken des Rastelements 6 gleiten dabei entlang der Zahnreihen eines entsprechenden Gegenrastelementes 7 und rasten dabei ein.

Weiterhin zeigt Figur 4 ein Entriegelungselement 9, welches auf der Unterseite des Basisschenkels 3 zum Zusammenwirken mit den Schnapphaken des Rastelements 6 angeordnet ist. Das Entriegelungselement 9 ist als Winkelstück ausgeführt und kann beispielsweise aus Metall gefertigt sein. Das Entriegelungselement 9 ist mit seiner Winkelkante derart im Basisschenkel 3 angeordnet, dass es die Schnapphaken des Rastelements 6 teilweise untergreift. Gleichzeitig ist das Entriegelungselement 9 mit einer Aussparung an der Winkelkante an einem Haltezapfen 10 des Basisschenkels festgelegt. Ferner wird das Entriegelungselement 9 an der den Schnapphaken des Rastelements 6 gegenüberliegenden Seite in einer Halterung 11 geführt. Somit ist das Entriegelungselement 9 stabil im Basisschenkel 3 angeordnet, wobei ein Herausspringen des Entriegelungselements 9 aus dem Basisschenkel 3 unterbunden wird.

Das Entriegelungselement 9 dient dem leichten manuellen Entriegeln der Schnapphaken des Rastelements 6. Figur 4 zeigt dabei den verriegelten Zustand der gesamten Rastvorrichtung. Durch Druck kann das Entriegelungselement 9 auf der den Schnapphaken des Rastelements 6 gegenüberliegenden Seite nach unten gedrückt werden, wobei sich an den Schnapphaken aufgrund der winkelförmigen Ausführung des Entriegelungselements 9 eine richtungsumgekehrte Kraftwirkung einstellt und die Schnapphaken nach oben gedrückt werden.

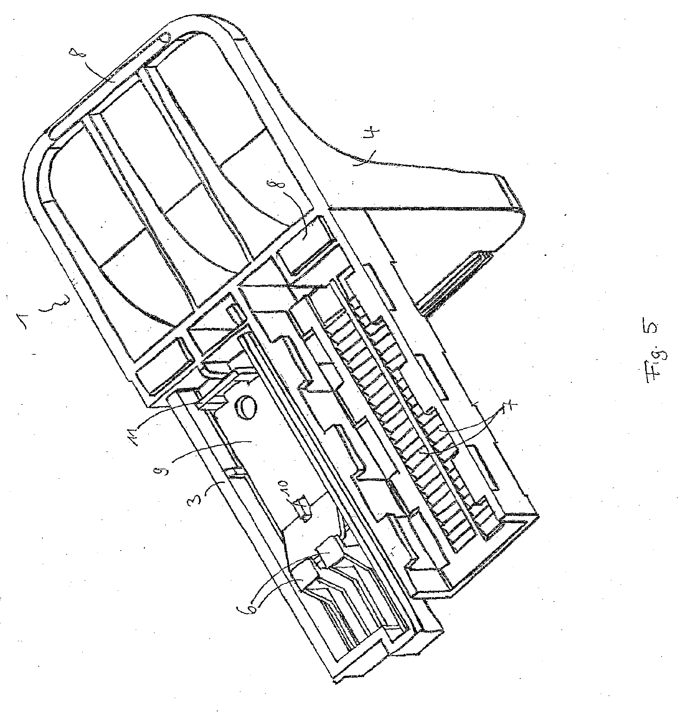

Figur 5 zeigt die Anordnung gemäß Figur 4, wobei das Entriegelungselement nach unten gedrückt ist. Dadurch werden die Schnapphaken des Rastelements 6 nach oben angehoben, wobei eine rastende Verbindung mit zwei Zahnreihen eines Gegenrastelements 7 gelöst wird, falls die Schnapphaken des Rastelements 6 mit Rastmitteln beispielsweise in den Zahnreihen eines Gegenrastelements 7 eines weiteren Stellelements 1 oder eines Erweiterungselements 2 verrastet waren. Dieser einfache Mechanismus eines Entriegelungselements 9 im Zusammenwirken mit Schnapphaken eines Rastelements 6 ermöglicht das einfache und sichere Entriegeln einer Anordnung von Stellelementen 1 mit Erweiterungselementen 2. Die Entriegelung kann in einem Handgriff auch von einem ungeübten Benutzer ohne Zuhilfenahme einer Gebrauchsanleitung intuitiv durchgeführt werden.

Die Erfindung ist nicht auf die dargestellten Ausführungsformen beschränkt. So können alle Basisschenkel 3 der Stellelemente 1 und der Erweiterungselemente 2 mit entsprechenden Entriegelungselementen 9 gemäß Figur 4 und 5 ausgeführt sein. Auch die Anzahl von zwei Schnapphaken im Zusammenwirken mit zwei Zahnreihen eines Rastelements 6 mit einem Gegenrastelement 7 ist hier lediglich beispielhaft gewählt. Ferner kann die in den Figuren 1 bis 3 dargestellte Anordnung von zwei Stellelementen mit einem Erweiterungselement beliebig um zusätzliche Erweiterungselemente zur Aufnahme weiterer Gehäuse ergänzt werden. Zur kippsicheren Aufstellung werden Gehäuse entweder in eine einzelne, räumlich tief ausgeführte, Anordnung oder in zwei räumlich hintereinander aufgestellte Anordnungen eingesetzt. Dabei können neben PC- oder Server-Gehäusen auch Gehäuse von Home-Entertainment Anlagen, wie DVD-Geräten, Settop-Boxen oder Spielekonsolen berücksichtigt werden.

### Bezugszeichenliste

- 1: Stellelement
- 2: Erweiterungselement
- 3: Basisschenkel
- 4: Stützelement
- 5: Stellfläche
- 6: Rastelement
- 7: Gegenrastelement
- 8: Gummielemente
- 9: Entriegelungselement
- 10: Haltezapfen
- 11: Halterung

## Patentansprüche

1. Anordnung zum Aufstellen wenigstens eines Computergehäuses mit zwei Stellelementen (1), die jeweils einen Basisschenkel (3) zur Auflage auf einer Aufstellfläche und ein senkrecht zum Basisschenkel (3) verlaufendes Stützelement (4) zur seitlichen Stützung des Computergehäuses umfassen,
**dadurch gekennzeichnet, dass**
die Anordnung ein oder mehrere Erweiterungselemente (2) aufweist, die zwischen den zwei Stellelementen (1) angeordnet sind, wobei die Erweiterungselemente (2) zwei Basisschenkel (3) und ein senkrecht zu den Basisschenkeln (3) verlaufendes Stützelement (4) umfassen und das Stützelement (4) zwischen den zwei Basisschenkeln (3) angeordnet ist.

2. Anordnung nach Anspruch 1,
**dadurch gekennzeichnet, dass**
ein Erweiterungselement (2) mit den beiden Stellelementen (1) oder mit einem Stellelement (1) und einem anderen Erweiterungselement (2) oder mit zwei anderen Erweiterungselementen (2) verbunden ist.

3. Anordnung nach Anspruch 1 oder 2,
**dadurch gekennzeichnet, dass**
die Stellelemente (1) und die Erweiterungselemente (2) dazu eingerichtet sind, ineinander verschoben zu werden und in einer Vielzahl von Positionen miteinander zu verrasten.

4. Anordnung nach Anspruch 3,
**dadurch gekennzeichnet, dass**
jedes der Stellelemente (1) mindestens ein Rastelement (6) und mindestens ein Gegenrastelement (7) aufweist und jedes der Erweiterungselemente (2) mindestens zwei Rastelemente (6) und mindestens zwei Gegenrastelemente (7) aufweist.

5. Anordnung nach Anspruch 4,
**dadurch gekennzeichnet, dass**
jedes Rastelement (6) beziehungsweise Gegenrastelement (7) der Stellelemente (1) und Erweiterungselemente (2) derart angeordnet ist, dass es mit jeweils einem Gegenrastelement (7) beziehungsweise Rastelement (6) eines anderen Erweiterungselements (2) oder Stellelements (1) als Rastvorrichtung zusammenwirkt.

6. Anordnung nach Anspruch 4 oder 5,
**dadurch gekennzeichnet, dass**
ein Rastelement (6) als Schnapphaken mit Rastmitteln und ein Gegenrastelement (7) als Zahnreihe ausgebildet ist.

7. Anordnung nach einem der Ansprüche 2 bis 6,
**dadurch gekennzeichnet, dass**
jeder Basisschenkel (3) jeweils eine erhobene Stellfläche (5) aufweist, auf der ein aufgenommenes Computergehäuse in dessen Randbereich aufliegt.

8. Anordnung nach einem der Ansprüche 1 bis 7,
**dadurch gekennzeichnet, dass**
die Anordnung dazu eingerichtet ist, ein oder mehrere Computergehäuse schraubenlos aufzunehmen.

9. Anordnung nach einem der Ansprüche 1 bis 8,
**dadurch gekennzeichnet, dass**
ein Computergehäuse ein Gehäuse eines Desktop-Personal-Computers oder eines Servers umfasst.

10. Anordnung nach einem der Ansprüche 1 bis 9,
**dadurch gekennzeichnet, dass**
jeweils die Stellelemente (1) und jeweils die Erweiterungselemente (2) identisch sind.

11. Anordnung zum Aufstellen wenigstens eines Computergehäuses mit zwei Stellelementen (1), die jeweils einen Basisschenkel (3) mit wenigstens einem Rastelement (6) und wenigstens einem Gegenrastelement (7) und ein senkrecht zum Basisschenkel (3) verlaufendes Stützelement (4) zur seitlichen Stützung eines Computergehäuses umfassen und dazu eingerichtet sind, gegeneinander verschoben zu werden und in einer Vielzahl von Positionen miteinander zu verrasten,
**dadurch gekennzeichnet, dass**
in jedem Basisschenkel (3) wenigstens ein Entriegelungselement (9) angeordnet ist, welches dazu eingerichtet ist, ein Rastelement (6) bei Druck auf das Entriegelungselement (9) aus einer rastenden Verbindung mit einem Gegenrastelement (7) eines anderen Basisschenkels (3) zu lösen.

12. Anordnung nach Anspruch 11,
**dadurch gekennzeichnet, dass**
die Stellelemente (1) aus Kunststoff und die Entriegelungselemente (9) aus Metall gefertigt sind.

13. Anordnung nach Anspruch 11 oder 12,
**dadurch gekennzeichnet, dass**
ein jeweiliges Entriegelungselement (9) als flächiges Winkelstück ausgeführt und mit der Winkelkante derart in den Basisschenkel (3) eingesetzt ist, dass es das Rastelement (6) teilweise untergreift.

14. Anordnung nach Anspruch 13,
**dadurch gekennzeichnet, dass**
ein jeweiliges Entriegelungselement (9) an der dem Rastelement (6) gegenüberliegenden Seite in einer Halterung (11) am Basisschenkel (3) geführt wird und der Basisschenkel (3) einen Haltezapfen (10) aufweist, der in eine Aussparung an der Winkelkante des Entriegelungselements (9) greift.

15. Anordnung nach einem der Ansprüche 11 bis 14,
**dadurch gekennzeichnet, dass**
die Anordnung gemäß einem der Ansprüche 1 bis 10 ausgeführt ist.

16. Anordnung nach Anspruch 15,
**dadurch gekennzeichnet, dass**
in jedem Basisschenkel (3) von Erweiterungselementen (2) wenigstens ein Entriegelungselement (9) angeordnet ist.
